Europäisches Patentamt

European Patent Office

Office européen des brevets

(11) Veröffentlichungsnummer: **0 218 835 B1**

# EUROPÄISCHE PATENTSCHRIFT

(45) Veröffentlichungstag der Patentschrift: **28.10.92**

(51) Int. Cl.⁵: **G11B 15/44**, G11B 15/18

(21) Anmeldenummer: **86111038.5**

(22) Anmeldetag: **09.08.86**

(54) **Kurzrücklaufschaltung für ein Diktiergerät.**

(30) Priorität: **12.10.85 DE 3536504**

(43) Veröffentlichungstag der Anmeldung:
**22.04.87 Patentblatt 87/17**

(45) Bekanntmachung des Hinweises auf die
Patenterteilung:
**28.10.92 Patentblatt 92/44**

(84) Benannte Vertragsstaaten:
**DE FR GB**

(56) Entgegenhaltungen:
**DE-A- 3 018 517**

**GRUNDIG TECHNISCHE INFORMATIONEN,
Heft 3, 1983, Fürth, DE, H. J. HAAS: "Grundig
Stereonette 2400", Seiten 144-166**

**ING. DIETER NÜHRMANN: "Das grosse Werkbuch Elektronik", Teil B, 5. Auflage 1989,
Franzis-Verlag GmbH, München, Seiten
2458-2462 und 2468 und 2473**

**ARTHUR H. SEIDMAN: "Integrated Circuits
Applications Handbook", John Wiley & Sons,
New York - Chichester - Brisbane - Toronto -
Singapore, 1983, S. 224-225**

**ARTHUR B. WILLIAMS: "Designer's Handbook of Integrated Circuits", McGraw-Hill Book
Company, New York, St. Louis, San Francisco, Auckland, Bogotà, Hamburg, Johannesburg, London, Madrid, Mexico, Montreal, New
Dehli,Panama, Paris,Sao Paulo, Singapore,
Sydney, Tokyo, Totonto, 1984, S.6-10 bis
6-15;**

**TEXAS INSTRUMENTS DEUTSCHLAND GMBH
LEARNING CENTER: "Pocket Guide", Band 2,
Professional Linear, Ausgabe 1983, 9. überarbeitete Auflage, vergrösserte Kopien der
S.13 und 66**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Emmert, Reinhold
Reiherstrasse 14
W-8510 Fuerth(DE)**

EP 0 218 835 B1

## Beschreibung

Die Erfindung betrifft eine Kurzrücklaufschaltung der im Oberbegriff des Anspruchs 1 angegebenen Art.

Aus "GRUNDIG Technische Informationen", Heft 3, 1983, ist eine derartige Schaltung bekannt. Dort wird der Motor des Laufwerks über eine Motorelektronik von einem Mikroprozessor für die Kurzrücklauffunktion umgepolt und nach Ablauf einer einstellbaren Zeit wieder in die alte Laufrichtung zurückgeschaltet. Zur Festlegung des Zeitablaufs und zur Erzeugung der notwendigen Steuerbefehle ist eine Transistoranordnung vorgesehen, die ein RC-Glied mit veränderbarer Zeitkonstante enthält.

Der Nachteil der bekannten Kurzrücklaufschaltung liegt in der aufwendigen Schaltungstechnik, die zur Bestimmung des Zeitablaufs und zur Ansteuerung des Mikroprozessors erforderlich ist. Auch die DE-A-3 018 517 beschreibt eine be = sondre Zeitschaltung auf der Basis des IC 555 als Monoflop.

Der Erfindung liegt die Aufgabe zugrunde, bei einer Kurzrücklaufschaltung der im Oberbegriff des Anspruchs 1 angegebenen Art Maßnahmen vorzusehen, die den schaltungstechnischen Aufwand für die Steuerung des Zeitablaufs erheblich reduzieren.

Diese Aufgabe wird gemäß der Erfindung durch die im kennzeichnenden Teil des Patentanspruchs 1 angegebenen Merkmale gelöst. Eine vorteilhafte Weiterbildung der Erfindung ist im Unteranspruch gekennzeichnet.

Bei der Kurzrücklaufschaltung gemäß der Erfindung ist in vorteilhafter Weise zur Festlegung des Zeitablaufs für die vom Mikroprozessor gesteuerte Kurzrücklauffunktion und zur Ansteuerung des Mikroprozessors selbst ausschließlich ein RC-Serienglied vorgesehen. Hierdurch ergeben sich nicht nur Vorteile hinsichtlich der Schaltungstechnik und der damit verbundenen Bauteilekosten, sondern auch hinsichtlich des Bauraumes, der von der Schaltung innerhalb des Geräts eingenommen wird.

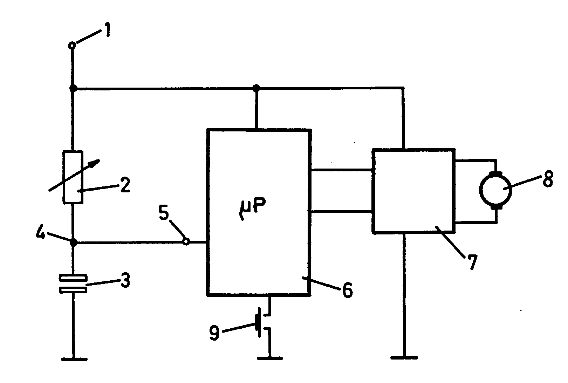

Die Erfindung ist im folgenden anhand einer Zeichnung näher erläutert. Die Figur zeigt ein bevorzuges Ausführungsbeispiel einer Kurzrücklaufschaltung gemäß der Erfindung.

Die dargestellte Schaltung verfügt über ein RC-Serienglied 2, 3, das einen veränderbaren Widerstand 2 aufweist und an eine Spannungsquelle 1 angeschlossen ist. Der Verbindungspunkt 4 des betreffenden RC-Gliedes ist an einen bidirektionalen Port 5 eines Mikroprozessors 6 gelegt. Dieser steht über eine Motorelektronik 7 mit einem Motor 8 für den Bandtransport des Diktiergeräts in Verbindung. Zum Start des Kurzrücklaufs ist ein Tastschalter 9 vorgesehen, der im gedrückten Zustand einen geeigneten Anschluß des Mikroprozessors mit Masse verbindet.

Für den Fall, daß der Kurzrücklauf und die die Rücklaufdauer bestimmende Zeitfunktion nicht gestartet werden, also der Tastschalter 9 nicht betätigt wird, wirkt der Port 5 des Mikroprozessors gewissermaßen als Prozessorausgang, der ein auf Massepotential liegendes Spannungspotential führt. Hierdurch wird ein Aufladen des Kondensators 3 verhindert. Wird dagegen mittels des Tastschalters 9 der Kurzrücklaufbefehl gegeben, dann erfolgt über die Motorelektronik 7 unmittelbar eine Umpolung der Motorbetriebsspannung.Gleichzeitig wird der Port 5 des Mikroprozessors von Masse getrennt. Dieser erhält nunmehr die Funktion eines Prozessoreingangs und dient zur Überwachung der sich aufbauenden Spannung am Kondensator 3. Erreicht die Kondensatorspannung einen vorgegebenen Schwellwert, so wird ein Schaltvorgang ausgelöst, der den Rücklauf beendet und das Gerät in den ursprünglichen Betriebszustand vor Betätigung der Kurzrücklauftaste 9 umschaltet. Hierbei wird auch der Port 5 des Mikroprozessors wieder auf Massepotential gelegt, was eine Entladung des Kondensators 3 zur Folge hat. Die die Rücklaufdauer bestimmende Zeitkonstante des RC-Gliedes 2, 3 ist mit Hilfe des veränderbaren Widerstandes 2 frei wählbar.

## Patentansprüche

1. Kurzrücklaufschaltung für ein Diktiergerät mit von einem Mikroprozessor (6) gesteuertem Laufwerk, bei der ein an eine Spannungsquelle angeschlossenes RC-Serienglied, das die Rücklaufzeit bestimmt, und eine Schalteinrichtung zum Start des Kurzrücklaufs vorgesehen sind, **dadurch gekennzeichnet,** daß der Verbindungspunkt (4) des RC-Gliedes (2, 3) an einen bidirektionalen Port (5) des Mikroprozessors (6) gelegt ist, der über den bidirektionalen Port bei nicht gestartetem Kurzrücklauf am Kondensator (3) des RC-Gliedes einen Kurzschluß erzeugt und bei gestartetem Kurzrücklauf die am Kondensator sich aufbauende Schaltspannung überwacht, die bei Erreichen eines Schwellwertes die Beendigung des Kurzrücklaufs und das Umschalten des Geräts in den ursprünglichen Betriebszustand bewirkt.

2. Kurzrücklaufschaltung nach Anspruch 1, **dadurch gekennzeichnet,** daß der Widerstand (2) des RC-Seriengliedes veränderbar ist.

## Claims

1. Backspace circuit for a dictating machine having a drive mechanism controlled by a microprocessor (6), in which there are provided a RC series element, which is connected to a voltage source and determines the back-space time, and a switching device for starting the short backspace, characterised in that the tie point (4) of the RC element (2, 3) is connected to a bidirectional port (5) of the microprocessor (6), which when the short return is not started produces a short circuit at the capacitor (3) of the RC element via the bidirectional port, and when the short return has been started monitors the switching voltage, which is building up at the capacitor and upon reaching a threshold value terminates the short return and switches the machine over into the original operating state.

2. Backspace circuit according to Claim 1, characterised in that the resistor (2) of the RC series element is variable.

**Revendications**

1. Circuit de retour sur une courte distance pour un dictaphone comportant un dérouleur commandé par un microprocesseur et dans lequel il est prévu un circuit série RC, qui est raccordé à une source de tension et détermine la durée de retour, et un dispositif de commutation pour faire démarrer le retour sur une courte distance, caractérisé en ce que le point de raccordement (4) du circuit RC (2,3) est raccordé à un port bidirectionnel (5) du microprocesseur (6), qui produit, par l'intermédiaire du port bidirectionnel, un court-circuit au niveau du condensateur (3) du circuit RC, lorsque le retour sur une courte distance n'est pas déclenché, et, lorsque le retour sur une courte distance est déclenché, surveille la tension de commutation qui s'établit aux bornes du condensateur et qui, lorsqu'elle atteint une valeur de seuil, provoque l'arrêt du retour sur une courte distance et la commutation de l'appareil à l'état de fonctionnement initial.

2. Circuit de retour sur une courte distance selon la revendication 1, caractérisé en ce que la résistance (2) du circuit série RC est variable.